# EUROPÄISCHE PATENTANMELDUNG

(11) **EP 0 630 780 A1**
(43) Veröffentlichungstag der Anmeldung: **28.12.1994**
(21) Anmeldenummer: 94107196.1
(22) Anmeldetag: 07.05.1994
(51) Int. Cl.: B60Q 1/26

(54) **Schaltungsanordnung für eine Blinklichtanlage**

(30) Priorität: 08.06.1993 DE 4318879
(71) Anmelder: Gebhard, Dietrich, D-76316 Malsch (DE)
(72) Erfinder: Gebhard, Dietrich, D-76316 Malsch (DE)
(74) Vertreter: Otten, Hajo, Dr.-Ing.

(57) **Zusammenfassung**

Eine Schaltungsanordnung (10) für eine Blinklichtanlage (11) eines aus einem Zugfahrzeug und einem elektrisch an das Zugfahrzeug anschließbaren Hänger bestehenden Wagenzuges umfaßt einen Blinktaktgeber (17), der dazu ausgelegt ist, an seinem Taktausgang (21) sämtliche je Fahrtrichtung vorgesehenen Blinklampen (12, 13, 14) des Wagenzuges zu betreiben. Der Blinktaktgeber (17) umfaßt Steuereingänge (E1, E2; 26, 27), über die die Anzahl der je Fahrtrichtung vorgesehenen und überwachten Blinklampen des Zugfährzeuges auswählbar ist. Der Blinktaktgeber (17) treibt ferner eine Signallampe (23) zur Anzeige des Blinktaktes, wobei der Blinktaktgeber (17) bei nicht elektrisch angeschlossenem Hänger den Ausfall einer angesteuerten Blinklampe (12, 13) des Zugfahrzeuges über eine erhöhte Blinkfrequenz anzeigt. Der oder jeder Steuereingang (E1, E2; 27, 26) des Blinktaktgebers (17) ist mit Schaltmitteln (24) verbunden, die bei elektrisch angeschlossenem Hänger den oder jeden Steuereingang (E1, E2; 27, 26) derart beschalten, daß der Blinktaktgeber (17) bei Ausfall einer angesteuerten Blinklampe (12, 13, 14) des Wagenzuges auf die erhöhte Blinkfrequenz schaltet.

## Beschreibung

Die Erfindung betrifft eine Schaltungsanordnung für eine Blinklichtanlage eines aus einem Zugfahrzeug und einem elektrisch an das Zugfahrzeug anschließbaren Hänger bestehenden Wagenzuges, mit einem Blinktaktgeber, der dazu ausgelegt ist, an seinem Taktausgang sämtliche je Fahrtrichtung vorgesehenen Blinklampen des Zugfahrzeuges zu betreiben, der zumindest einen Steuereingang aufweist, über den die Anzahl der je Fahrtrichtung vorgesehenen und überwachten Blinklampen des Zugfahrzeuges auswählbar ist, und der eine Signallampe zur Anzeige des Blinktaktes treibt, wobei der Blinktaktgeber bei nicht elektrisch angeschlossenem Hänger den Ausfall einer angesteuerten Blinklampe des Zugfahrzeuges über eine erhöhte Blinkfrequenz anzeigt.

Derartige Schaltungsanordnungen sind aus der Praxis bekannt.

Die bekannten Schaltungsanordnungen weisen einen Blinktaktgeber auf, der in der Regel je Fahrtrichtung drei Blinklampen treiben kann, und der einen Kontrollausgang aufweist, an dem der je Fahrtrichtung gleichzeitige Betrieb der entsprechenden Blinklampen des Zugfahrzeuges und des Hängers angezeigt wird. Zwei dieser Blinklampen gehören zu der Blinklichtanlage des Zugfahrzeuges und die dritte Blinklampe zu der Blinklichtanlage des Hängers. Sämtliche Blinklampen werden in der Regel parallel betrieben, so daß der Stromfluß aus dem Blinktaktgeber umso größer wird, je mehr Blinklampen angeschlossen sind.

Ist der Hänger elektrisch an das Zugfahrzeug angeschlossen, so treibt der Blinktaktgeber folglich drei Blinklampen je Fahrtrichtung. In diesem Falle gibt er an seinem C2 genannten Kontrollausgang ein Signal aus, über das mit dem Blinktakt in der Regel eine Kontrolleuchte betrieben wird, die im Armaturenbrett unterzubringen ist. Anhand dieser im Blinktakt blinkenden Kontrolleuchte kann der Fahrzeugführer erkennen, daß sämtliche drei Blinklampen funktionsfähig sind. Zusätzlich weist die Schaltungsanordnung die übliche Signallampe auf, welche ebenfalls in dem Armaturenbrett vorgesehen ist, und nicht nur den Blinktakt sondern auch die Fahrtrichtungsanzeige wiederspiegelt. Wenn der Blinktaktgeber dagegen nur zwei Blinklampen je Fahrtrichtung treibt, sei es, daß eine der drei Blinklampen je Fahrtrichtung ausgefallen ist, oder daß aber kein Hänger elektrisch angeschlossen ist, so gibt der Blinktaktgeber an seinem Kontrollausgang C2 kein Signal aus. Die Signallampe wird jedoch weiter betrieben und zeigt den Blinktakt und die Fahrtrichtung an.

Ist jetzt kein Hänger angeschlossen und fällt zusätzlich eine Blinklampe der Blinklichtanlage des Zugfahrzeuges aus, so erkennt dies der Blinktaktgeber an der veränderten Stromabgabe und schaltet auf eine höhere Blinkfrequenz.

Wegen der bei dem bekannten Blinktaktgeber vorgesehenen Steuereingänge ist es ferner möglich, nicht nur die üblicherweise zwei Blinklampen des Zugfahrzeuges je Fahrtrichtung zu treiben und zu überwachen, sondern zusätzlich z.B. auf den Türen oder in den Stoßstangen vorgesehene Blinklampen treiben zu können. Die bekannten Blinktaktgeber sind somit universell einsetzbar, durch eine feste Beschaltung der Steuereingänge mit Spannungsteilern werden die jeweiligen Blinktaktgeber auf die Gegebenheiten des speziellen Zugfahrzeuges abgestimmt. Diese Blinktaktgeber sind dabei dazu ausgelegt, je Fahrtrichtung zwei Blinklampen mit einer Leistungsaufnahme von jeweils 21 W sowie mehrere Blinklampen mit geringerer Leistungsaufnahme zu treiben.

Bei der insoweit beschriebenen Schaltungsanordnung wird es als Nachteil empfunden, daß der Fahrzeugführer anhand der Betriebszustände der Kontrolleuchte und der Signallampe nicht erkennen kann, ob eine der Blinklampen je Fahrtrichtung ausgefallen ist oder ob der Hänger nicht richtig gesteckt ist.

Hier ist zu bemerken, daß die Blinktaktgeber üblicherweise nur zum Betreiben von zwei Blinklampen (plus ggf. eine z.B. Türblinklampe mit geringerer Leistungsaufnahme) je Fahrtrichtung ausgelegt sind. Soll ein Zugfahrzeug auf Hängerbetrieb umgerüstet werden, so gab es bisher die folgenden beiden Möglichkeiten:

Der zum Betreiben von zwei Blinklampen je Fahrtrichtung vorgesehene Blinktaktgeber wird gegen einen solchen ausgetauscht, der drei Blinklampen je Fahrtrichtung betreiben kann, wie dies eingangs bereits beschrieben wurde. Darüberhinaus muß die zusätzliche Kontrolleuchte C2 im Blickfeld des Fahrzeugführers montiert werden. Insbesondere bei Fahrzeugen mit Airbag und ähnlichen Sicherheitseinrichtungen führt insbesondere das nachträgliche Einbauen dieser Kontrolleuchte zu langwierigen und damit kostenintensiven Arbeiten. Insbesondere bei kleinen Zugfahrzeugen ist es darüberhinaus oft gar nicht möglich, diese zusätzliche Kontrolleuchte im Armaturenbrett unterzubringen.

Darüberhinaus ist es bekannt, den zum Betreiben von zwei Blinklampen je Fahrtrichtung ausgelegten Blinktaktgeber im Fahrzeug zu belassen und entweder die hintere Blinklampe des Zugfahrzeuges oder die Blinklampe des Hängers über eine hochohmige Treiberschaltung zu betreiben, welche den Blinktaktgeber nicht zusätzlich belastet. Die hierzu erforderliche Schaltungsanordnung umfaßt in der Regel noch eine Fehlererkennungsschaltung, welche die jeweils hochohmig betriebene Blinklampe überwacht. Fällt diese dritte Blinklampe aus, was der Blinktaktgeber nicht erkennen kann, so wird eine der beiden unmittelbar von dem Blinktaktgeber betriebenen Blinklampen von dem Blinktaktgeber weggeschaltet und ebenfalls hochohmig betrieben. Auf diese Weise wird dem Blinktaktgeber der Ausfall einer Blinklampe simuliert, was dazu führt, daß der Blinktaktgeber auf die erhöhte Blinkfrequenz umschaltet.

Bei dieser z.B. aus der DE-OS 41 34 993 bekannten Schaltung ist es von Nachteil, daß eine große Anzahl von Bauteilen benötigt wird, um einerseits für das hochohmige Abgreifen und andererseits für das Wegschalten zur Fehlersimulation zu sorgen. Zwar sind mit dieser Schaltungsanordnung die Einbauprobleme beseitigt, welche mit dem Nachrüsten eines für drei Blinklampen vorgesehenen Blinktaktgebers sowie der zugehörigen Kontrolleuchte verbunden sind, es bleiben jedoch die hohen Kosten.

Darüberhinaus ist es aus der DE-OS 41 35 546 bekannt, in die Blinklichtanlage des Zugfahrzeuges zur Beeinflussung des Blinktaktgebers einen Fehlerstrom einzuspeisen, wenn die hochohmig betriebene Blinklampe des Hängers defekt ist. Bei dieser Anordnung kann auf das Wegschalten einer intakten Blinklampe zwar verzichtet werden, es sind jedoch immer noch eine Reihe von Bauteilen erforderlich, welche zu erhöhten Kosten führen. So ist es z.B. nötig, neben der Fehlererkennungsschaltung noch eine Hängererkennungsschaltung vorzusehen, welche anhand eines gesonderten Massekontaktes oder anhand der über weitere Lampen der Signalanlage des Hängers gelieferten Massekontakte erkennt, ob tatsächlich ein Hänger elektrisch an das Zugfahrzeug angeschlossen ist.

Darüberhinaus müssen die bekannten Schaltungen in sogenannten Anhängermodulen im Bereich des Übergabesteckers zwischen Zugfahrzeug und Anhänger im Heck des Zugfahrzeuges untergebracht werden. Dies ist aus Platzgründen jedoch oft mit großem Aufwand verbunden.

Ausgehend von diesem Stand der Technik ist es Aufgabe der vorliegenden Erfindung, eine Schaltungsanordnung der eingangs genannten Art dahingehend weiterzubilden, daß es bei geringem Bauteil- und Montageaufwand möglich wird, sowohl die Blinklampen des Zugfahrzeuges als auch die nur ggf. angeschalteten Blinklampen des Hängers zu überwachen.

Erfindungsgemäß wird diese Aufgabe dadurch gelöst, daß der oder jeder Steuereingang des Blinktaktgebers mit Schaltmitteln verbunden ist, die bei elektrisch angeschlossenem Hänger den oder jeden Steuereingang derart beschalten, daß der Blinktaktgeber bei Ausfall einer angesteuerten Blinklampe auf die erhöhte Blinkfrequenz schaltet.

Die der Erfindung zugrundeliegende Aufgabe wird auf diese Weise vollkommen gelöst. Die erfindungsgemäß vorgesehenen Schaltmittel beeinflussen den Blinktaktgeber jetzt nämlich über die Steuereingänge, welche eigentlich nur für eine feste Beschaltung während der Montage in dem Zugfahrzeug vorgesehen sind. Der Anmelder hat jedoch überraschenderweise gefunden, daß durch eine entsprechende noch näher zu erläuternde Beeinflussung des Blinktaktgebers über die Steuereingänge eine einfache Fehleranzeige möglich ist.

Die Schaltmittel können z.B. die oben erwähnten Fehlererkennungsschaltungen umfassen, so daß sie zunächst den Ausfall einer angesteuerten Blinklampe erkennen. Wenn der Blinktaktgeber zum Betreiben von zwei Blinklampen im Zugfahrzeug sowie zusätzlich einer Blinklampe im Hänger je Fahrtrichtung ausgerüstet ist, so würde dieser Ausfall einer Blinklampe zunächst nicht dazu führen, daß der Blinktaktgeber auf die erhöhte Blinkfrequenz umschaltet. Dieser Ausfall würde vielmehr lediglich auf dem ggf. vorhandenen Kontrollausgang angezeigt. Über die Schaltmittel werden die Steuereingänge jetzt jedoch in der Weise beschaltet, daß der Blinktaktgeber nun zum Betreiben von drei Blinklampen im Zugfahrzeug sowie einer zusätzlichen Blinklampe im Hänger je Fahrtrichtung geschaltet ist. Da jedoch in Wirklichkeit nur insgesamt drei Blinklampen je Fahrtrichtung vorgesehen sind, erkennt der Blinktaktgeber einen Fehler und schaltet auf die erhöhte Blinkfrequenz. Hier ist von ganz besonderem Vorteil, daß auf den Einbau der C2-Kontrolleuchte im Armaturenbrett verzichtet werden kann. Die sowieso vorhandene Signallampe zur Anzeige des Blinktaktes wird durch diese "Umsteuerung" des Blinktaktgebers zur Fehleranzeige verwendet.

Eine derartige Beschaltung ist möglich, weil nach den Erkenntnissen des Anmelders durch eine geeignete Beschaltung der Steuereingänge die entsprechende Schaltschwelle im Blinktaktgeber so hoch gelegt werden kann, daß dieser auch drei Blinklampen mit 21 W Leistung überwachen kann.

Zusammengefaßt ist bei der neuen Schaltungsanordnung also von Vorteil, daß auf den Einbau der C2-Kontrolleuchte im Armaturenbrett während des Umrüstens eines Zugfahrzeuges auf Hängerbetrieb verzichtet werden kann. Es ist lediglich ein neuer Blinkgeber einzubauen, welcher über die neue Schaltungsanordnung in der soeben beschriebenen Weise betrieben wird. Gegenüber den eingangs genannten Maßnahmen der Fehlerstromeinspeisung oder des Wegschaltens bzw. Zuschaltens von hochohmig betriebenen Blinklampen hat die neue Schaltungsanordnung den weiteren Vorteil, daß erheblich weniger Bauteile erforderlich sind. So kann z.B. vollständig auf die erforderlichen Relais verzichtet werden. Die neue Schaltungsanordnung kann darüber hinaus mit den gleichen Vorteilen auch in Neufahrzeugen bei der Produktion eingebaut werden.

In einer Weiterbildung ist es bevorzugt, wenn die Schaltmittel bei elektrisch angeschlossenem Hänger den oder jeden Steuereingang derart beschalten, daß die Anzahl der überwachten Blinklampen gleich der Anzahl der Blinklampen je Fahrtrichtung ist.

Bei dieser Maßnahme ist von Vorteil, daß die Schaltmittel selbst keine Fehlererkennungsschaltungen mehr umfassen müssen, so daß sie konstruktiv noch einfacher aufgebaut werden können, als es aus dem Stand der Technik bekannt ist. In dem Augenblick, in dem ein Hänger elektrisch angeschlossen wird, wird dies über geeignete Maßnahmen den Schaltmitteln mitgeteilt, welche über die Steuereingänge den Blinktaktgeber dann so beschalten, als ob eine größere Anzahl von Blinklampen im Zugfahrzeug selbst vorhanden sei. Die Fähigkeit des Blinktaktgebers, den Ausfall einer Lampe des Zugfahrzeuges zu erkennen, wird somit quasi doppelt ausgenutzt. Derartige Maßnahmen sind aus dem Stand der Technik nicht bekannt, denn bisher wurde ja die C2-Kontrolleuchte zusätzlich verwendet, um - wie oben ausführlich beschrieben - eine zusätzliche Information über die Blinklampen des Hängers zu geben.

Die neue Schaltungsanordnung ist damit extrem einfach aufzubauen, denn sie benötigt lediglich einen Eingang, auf dem ihr der elektrische Anschluß eines Hängers "mitgeteilt" wird. In Abhängigkeit von dieser Information beschalten die Schaltmittel die Steuereingänge des Blinktaktgebers so, daß er sämtliche Blinklampen des Wagenzuges überwacht. Auch der Einbau der neuen Schaltungsanordnung gestaltet sich wesentlich einfacher als es aus dem eingangs diskutierten Stand der Technik bekannt ist. Soll nämlich ein Zugfahrzeug auf Hängerbetrieb umgerüstet werden, so muß nunmehr lediglich der Blinkgeber gewechselt und die neue Schaltungsanordnung eingebaut werden. Der Blinkgeber und die externe Beschaltung durch die neue Schaltungsanordnung können jedoch auch monolithisch als ein einziges IC oder aber als gedruckte Leiterplatte ausgelegt sein, so daß lediglich der bisherige Blinkgeber durch dieses neue Bauteil ersetzt werden muß. Darüberhinaus ist es lediglich erforderlich, für die Hängererkennung zu sorgen, was beispielsweise durch einen von dem Fahrzeugführer zu betätigenden Schalter erfolgen kann.

Hier ist es ferner bevorzugt, wenn eine Hängererkennungsschaltung vorgesehen ist, die einen elektrisch an das Zugfahrzeug angeschlossenen Hänger auf einer Hängererkennungsleitung meldet.

Hier ist von Vorteil, daß der Hänger automatisch erkannt wird, so daß der Fahrzeugführer nicht mehr nach dem Ankoppeln und elektrischen Anschalten des Hängers einen entsprechenden Schalter umlegen muß. Dies führt insoweit ebenfalls zu einer Reduzierung der Bauteile, da der zusätzliche Schalter wegfällt. Die Hängererkennungsschaltung ist an sich aus dem Stand der Technik bekannt. Neben der Abfrage der Hängermasse kann sie ihre Informationen auch durch Überwachung des Stromflusses beispielsweise durch den Schalter für Bremslicht und/oder Standlicht ableiten. Ein erhöhter Stromfluß deutet auf einen angeschlossenen Hänger hin.

Dabei ist es weiter bevorzugt, wenn bei einem Blinktaktgeber mit Kontrollausgang C2 die Hängererkennungsschaltung mit dem Kontrollausgang des Blinktaktgebers verbunden ist und aus den Signalen des Kontrollausganges einen elektrisch angeschlossenen Hänger erkennt.

Hier ist jetzt weiter von Vorteil, daß das sowieso erzeugte Signal auf dem Kontrollausgang dazu verwendet wird, einen Hänger zu erkennen. Dabei wird ausgenutzt, daß der Kontrollausgang nur dann ein Signal abgibt, wenn auch tatsächlich ein Hänger elektrisch angeschlossen ist und die Blinklichtanlage des Wagenzuges entsprechend betätigt wird. Die aus dem Stand der Technik bekannten Maßnahmen, einen zusätzlichen Hängererkennungskontakt oder eine Masseabfragevorrichtung für die Hängermasse vorzusehen, können damit entfallen. Auch dies führt zu einem sehr geringen Bauteilbedarf. Ferner ist es jetzt möglich, nicht nur die neuen Schaltmittel vorne im Zugfahrzeug unterzubringen, sondern auch die Hängererkennung ohne zusätzliche Leitungen zum Heck des Zugfahrzeuges aus vorne vorhandenen Informationen abzuleiten.

Bei dieser Ausführung ist es bevorzugt, wenn die Hängererkennungsschaltung ein Speicherelement umfaßt, welches das erste Ansprechen des Kontrollausgangs speichert und permanent auf der Hängererkennungsleitung meldet.

Diese Maßnahme ist insbesondere unter schaltungstechnischen Randbedingungen von Vorteil, denn es muß lediglich ein Speicherelement vorgesehen sein, was nach dem ersten Ansprechen des Kontrollausganges in einen permanenten Zustand geschaltet wird, aus dem es beispielsweise erst nach dem Öffnen des Zündschalters wieder zurückgesetzt wird. Mit anderen Worten geht das Speicherelement beispielsweise nach dem Starten des Zugfahrzeuges zunächst in einen Grundzustand, in dem es kein Signal auf der Hängererkennungsleitung ausgibt. Wird dann zum ersten Mal der Fabrtrichtungsschalter betätigt, so spricht der Kontrollausgang an, was von dem Speicherelement gespeichert wird. Auf diese Weise kann im einfachsten Fall ein Flip-Flop an den Kontrollausgang angeschlossen werden, wobei der Ausgang des Flip-Flops dann mit der Hängererkennungsleitung verbunden wird.

Insgesamt ist es hierbei bevorzugt, wenn der Kontrollausgang mit einer akustischen Einrichtung verbunden ist.

Es wurde bereits erwähnt, daß bei der neuen Schaltungsanordnung auf das Nachrüsten der zusätzlichen Kontrolleuchte im Armaturenbrett verzichtet werden kann. Um jedoch in Übereinstimmung mit dem § 54 STVO für eine Anzeige des Hängerbetriebes zu sorgen, wird die akustische Einrichtung vorgesehen. Der Kontrollausgang kann nun entweder jedesmal bei seinem Ansprechen über die akustische Einrichtung ein akustisches Signal abgeben, so daß der Fahrzeugführer jederzeit über die Funktionsfähigkeit sämtlicher Blinklampen je Fahrtrichtung informiert ist, oder dies aber nur einmal zu Beginn der Fahrt tun. Da der Fahrzeugführer weiß, daß er über die übliche Signallampe vollständig über den Zustand seiner Blinklichtanlage informiert wird, kann das zusätzliche akustische Signal nun dazu verwendet werden, dem Fahrzeugführer zu Beginn der Fahrt einmal anzuzeigen, daß der Hänger korrekt elektrisch an das Zugfahrzeug angeschlossen wurde. Fehlt das Signal, so muß der Fahrzeugführer gleich zu Fahrtbeginn die Blinklichtanlage überprüfen.

Beim Austausch des für zwei Blinklampen je Fahrtrichtung vorgesehenen Blinktaktgebers gegen den für drei Blinklampen vorgesehenen Blinktaktgebers kann die neue Schaltanordnung mit eingebaut werden, ohne daß größere Montagearbeiten an dem Zugfahrzeug durchgeführt werden müssen. Die neue Schaltungsanordnung umfaßt derart wenige Bauteile, daß sie sehr preiswert hergestellt werden kann. Darüberhinaus ist der Montageaufwand verglichen mit dem Einbau der zusätzlichen Kontrolleuchte vernachlässigbar gering.

Ferner ist es bevorzugt, wenn die Hängererkennungsschaltung mit einer Reset-Vorrichtung verbunden ist, über welche die Hängererkennungsleitung zurückschaltbar ist.

Diese Maßnahme ist insbesondere dann von Vorteil, wenn der Fahrzeugführer bei laufendem Zugfahrzeug den Hänger abkoppelt. Wäre jetzt keine Reset-Vorrichtung vorgesehen, so würde die Hängererkennungsschaltung immer noch den vorher gespeicherten Zustand eines angeschalteten Hängers auf der Hängererkennungsleitung ausgeben. Dies würde beim Betätigen des Fahrtrichtungsschalters dazu führen, daß die Schaltmittel einen Fehlerzustand erkennen und den Blinktaktgeber entsprechend beeinflussen.

Dabei ist es bevorzugt, wenn die Reset-Vorrichtung einen Schließkontakt umfaßt.

Dies ist die schaltungstechnisch einfachste Möglichkeit, einen Speicherbaustein zurückzusetzen. Dieser Schließkontakt kann ein Druckschalter sein, den der Fahrzeugführer nach dem Abkoppeln des Hängers kurz betätigt, um die Hängererkennungsschaltung zurückzusetzen. Gegenüber dem Einbau der im Blickfeld des Fahrers anzubringenden C2-Lampe hat dies den Vorteil, daß der Druckschalter an einer beliebigen Stelle untergebracht werden kann, was zu erheblich erleichterten Einbaubedingungen führt. Der Schließkontakt kann aber auch ein Türkontakt sein, der beim Öffnen der Fahrertür oder der Beifahrertür geschlossen wird. Steigen jetzt der Fahrer oder der Beifahrer aus dem laufenden Zugfahrzeug aus, um einen Hänger abzukoppeln, so führt dies automatisch zum Zurücksetzen der Hängererkennungsschaltung.

Dabei ist es weiter bevorzugt, wenn die Reset-Vorrichtung eine Meßvorrichtung für den Stromfluß durch ausgewählte Lampen des Hängers umfaßt und in Abhängigkeit von dem Stromfluß die Hängererkennungsleitung zurückschaltet.

Hier ist von Vorteil, daß auch dann, wenn eine dritte Person den Hänger abkoppelt, ohne daß eine der Türen geöffnet wurde, die Hängererkennungsschaltung jetzt durch die Meßvorrichtung zurückgesetzt wird. Zu diesen ausgewählten Lampen zählen vorzugsweise das Bremslicht oder das Standlicht. Die Reset-Vorrichtung muß lediglich über zwei Kabel mit dem entsprechenden Schalter beispielsweise für das Bremslicht verbunden werden, wobei die Meßvorrichtung zwischen Zuständen unterscheiden kann, in denen nur die Zugfahrzeug- oder zusätzlich noch die Hängerlampen angesteuert werden. Nachdem der Hänger abgekoppelt wurde, wird somit beim ersten Bremsen erkannt, daß kein Hänger vorliegt. Die Reset-Vorrichtung gibt daraufhin ein Rücksetzsignal an die Hängererkennungsschaltung aus.

Insgesamt ist es bevorzugt, wenn der Kontrollausgang mit einer Verriegelungsschaltung verbunden ist, die in Abhängigkeit von dem Betrieb der Warnblinkanlage den Kontrollausgang von der Hängererkennungsschaltung abkoppelt.

Diese Maßnahme ist für Blinktaktgeber vorgesehen, die auch dann ein C2-Signal ausgeben, wenn ohne elektrisch angeschlossenen Hänger die Warnblinkanlage betätigt wird, wenn also insgesamt vier Lampen von dem Blinktaktgeber versorgt werden. Diese Blinktaktgeber können nicht zwischen dem Betrieb von drei Blinklampen - Zugfahrzeug + Hänger - und dem Betrieb von vier Blinklampen - kein Hänger, aber Warnblinkanlage des Zugfahrzeuges eingeschaltet - unterscheiden. Daher muß die beim Betrieb der Warnblinkanlage fehlerhaft erfolgende Hängererkennung verhindert oder rückgängig gemacht werden. Zu diesem Zweck ist die Verriegelungsschaltung vorgesehen, die den Kontrollausgang von der Hängererkennungsschaltung abkoppelt. Auf diese Weise ist sichergestellt, daß beim Betrieb der Warnblinkanlage der Kontrollausgang der Hängererkennungsschaltung nicht in den Zustand schaltet, in dem sie auf ihrer Hängererkennungsleitung einen elektrisch angeschlossenen Hänger meldet.

Weiter ist es bevorzugt, wenn die Verriegelungsvorrichtung eine Meßschaltung für den von dem Blinktaktgeber abgegebenen Lampenstrom aufweist.

Hier ist von Vorteil, daß die Verriegelungsschaltung selbst erkennt, ob der Blinktaktgeber drei oder vier Lampen betreibt. Nur in dem Fall, in dem vier Lampen betrieben werden, wird der Kontrollausgang von der Hängererkennungsschaltung abgekoppelt. Hier ergeben sich aber auch keine Probleme, wenn beim Betrieb der Warnblinkanlage nur drei Lampen in Betrieb sind, weil eine der Lampen der Blinklichtanlage des Zugfahrzeuges ausgefallen ist. Zwar wird durch das Betätigen der Warnblinkanlage die Hängererkennungsschaltung entsprechend gesetzt, die daraufhin bei normalem Betrieb der Blinklichtanlage erfolgende Fehlermeldung würde jedoch sowieso zumindest in einer Fahrtrichtung erfolgen. Das gespeicherte Hängererkennungssignal veranlaßt die Schaltmittel nun nämlich, den Blinktaktgeber so zu beschalten, als ob ein Hänger angeschaltet wäre. Mit anderen Worten erwartet der Blinktaktgeber jetzt z.B. drei mal 21 W Leistungsaufnahme je Fahrtrichtung, also zwei mal 21 W vom Zugfahrzeug und ein mal 21 W vom Hänger. Da aber tatsächlich eine der Lampen des Zugfahrzeuges defekt ist, bietet diese Maßnahme sogar den zusätzlichen Vorteil, daß die defekte Lampe auch dann angezeigt wird, wenn der Fahrtrichtungsschalter bei dem augenblicklichen Schaltungszustand zwei funktionierende Lampen ansteuert, obwohl eine der Lampen der zur Zeit nicht ausgewählten Fahrtrichtung defekt ist.

Hier ist es bevorzugt, wenn die Schaltmittel eine Spannungsteilerschaltung umfassen, welche in Abhängigkeit von Signalen auf der Hängererkennungsleitung verschiedene Spannungsteiler mit den Steuereingängen verbindet.

Auch diese Maßnahme ist schaltungstechnisch von Vorteil, denn die Beschaltung der Steuereingänge mit unterschiedlichen Spannungsteilern ist die einfachste Möglichkeit, den Blinktaktgeber in der gewünschten Weise zu beeinflussen. Es können z.B. zwei verschiedene Spannungsteiler einmal für den Betriebszustand mit zwei überwachten Blinklampen je Fahrtrichtung und einmal für den Betriebszustand mit drei überwachten Blinklampen je Fahrtrichtung (angeschalteter Hänger) vorgesehen sein, zwischen denen mittels eines Relais oder elektronischen Umschalters in Abhängigkeit von der Hängererkennung umgeschaltet wird.

Dabei ist es bevorzugt, wenn nur ein Spannungsteiler vorgesehen ist, der elektronisch steuerbare Widerstände umfaßt, wobei das Spannungsteilerverhältnis in Abhängigkeit von Signalen auf der Hängererkennungsleitung veränderbar ist.

Hier ist von Vorteil, daß der Bauteilbedarf noch weiter reduziert wird. Insbesondere ist kein Relais oder ähnlicher mechanischer Umschalter mehr erforderlich, es können vielmehr elektronisch steuerbare Widerstände in Form z.B. von FETs gewählt werden, die sich einfach in einer integrierten Schaltung realisieren lassen.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen und in Alleinstellung verwendbar sind, ohne den Rahmen der vorstehenden Erfindung zu verlassen.

Die Erfindung ist in der Zeichnung dargestellt und wird in der nachfolgenden Beschreibung näher erläutert. Es zeigen:
- Fig. 1: eine prinzipielle Darstellung der neuen Schaltungsanordnung, in welcher die Blinklampen einer Fahrtrichtung, der Blinktaktgeber und die Schaltmittel schematisch dargestellt sind;
- Fig. 2: ein Ausführungsbeispiel der Schaltmittel aus Fig. 1 mit schematisch angedeuteter Spannungsteilerschaltung;
- Fig. 3: ein Ausführungsbeispiel der Spannungsteilerschaltung aus Fig. 2; und
- Fig. 4: ein zweites Ausführungsbeispiel der Spannungsteilerschaltung aus Fig. 2.

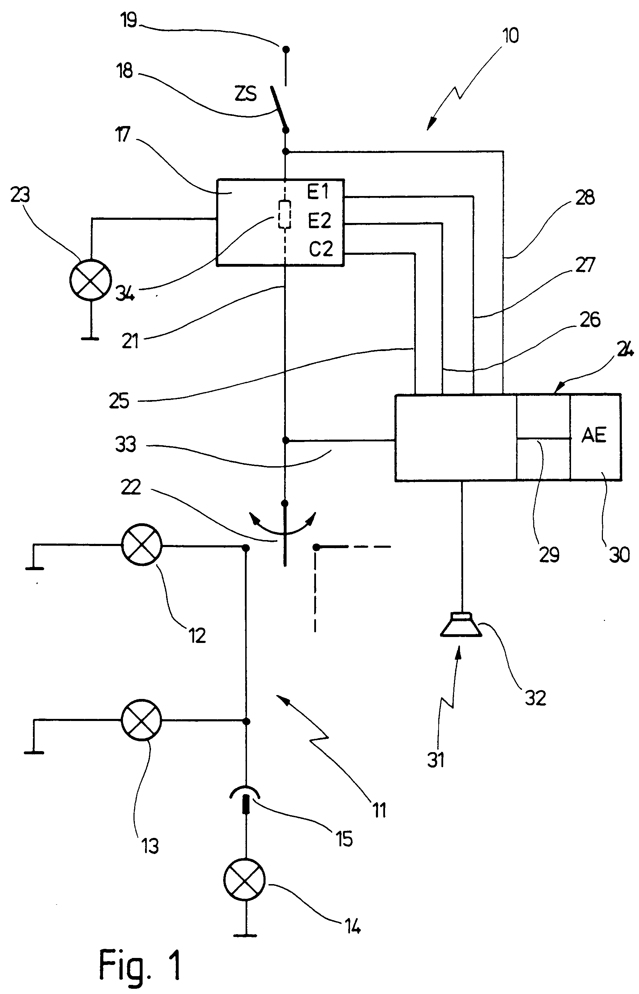

In Fig. 1 ist insgesamt mit 10 eine Schaltungsanordnung für eine bei 11 angedeutete Blinklichtanlage eines Wagenzuges bezeichnet. Die Blinklichtanlage 11 umfaßt je Fahrtrichtung drei Blinklampen 12, 13, 14. Die Blinklampen 12 und 13 sind Blinklampen des Zugfahrzeuges, während die Blinklampe 14 zu einem an das nicht dargestellte Zugfahrzeug elektrisch angeschlossenen Hänger gehört und über einen bei 15 gezeigten Stecker zu den Blinklampen 12 und 13 parallel geschaltet ist.

Die Blinklichtanlage 11 ist in Fig. 1 nur für eine Fahrtrichtung dargestellt, die Blinklampen der zweiten Fahrtrichtung sind jedoch entsprechend verschaltet.

Zum Betreiben der Blinklichtanlage 11 ist ein Blinktaktgeber 17 vorgesehen, welcher über einen mit ZS bezeichneten Zündschalter 18 mit einer Versorgungsspannung 19 verbunden ist, die üblicherweise dem Plusanschluß der Fahrzeugbatterie entspricht. Die äußere Beschaltung ist nur insoweit gezeigt, als sie für das Verständnis der neuen Schaltungsanordnung erforderlich ist.

Der Blinktaktgeber 17 ist an seinem Taktausgang 21 mit einem Fahrtrichtungsschalter 22 verbunden, der in Fig. 1 in seiner neutralen Mittenstellung gezeigt ist. Durch Verschwenken des Fahrtrichtungsschalters wird einer der beiden Zweige der Blinklichtanlage 11 mit dem Taktausgang 21 verbunden. Wenn dies geschieht, so gibt der Blinktaktgeber 17 an seinem Taktausgang 21 den Blinktakt aus und zeigt dies auf einer Signallampe 23 an.

Es sei noch bemerkt, daß der Blinktaktgeber 17 in der Regel einen Blinkgeber und ein davon getrenntes und von diesem angesteuertes Blinkrelais aufweist, welches zwischen die Versorgungsspannung 19 und den Taktausgang 21 geschaltet ist. Bei dem Blinktaktgeber 17 aus Fig. 1 wird jedoch der einfacheren Darstellung wegen angenommen, daß das Blinkrelais integraler Bestandteil des Blinktaktgebers 17 sei, obwohl der Blinktaktgeber 17 wie gesagt auch aus einem gesonderten Blinkgeber und einem davon getrennten Blinkrelais bestehen kann. In diesem Falle sind weitere Beschaltungen erforderlich, welche dafür sorgen, daß unmittelbar bei dem Umlegen des Fahrtrichtungsschalters 22 das Blinkrelais anzieht. Eine derartige Beschaltung ist jedoch aus dem Stand der Technik hinreichend bekannt und bedarf hier keiner weiteren Beschreibung.

Der Blinktaktgeber 17 weist ferner einen auch C2 genannten Kontrollausgang auf, der mit noch näher zu erläuternden Schaltmitteln 24 verbunden ist.

Der Blinktaktgeber 17 ist ein üblicher, für den Betrieb von drei Blinklampen je Fahrtrichtung ausgelegter Blinktaktgeber. Sind alle drei angeschlossenen Blinklampen 12, 13, 14 in Ordnung, so gibt der Blinktaktgeber in der üblichen Beschaltung sowohl auf dem Kontrollausgang C2 als auch auf der Signallampe 23 den Blinktakt an. Betreibt der Blinktaktgeber 17 dagegen nur zwei Blinklampen, so gibt er auf dem Kontrollausgang C2 kein Signal aus, während die Signallampe 23 weiter im Rhythmus des Blinktaktes blinkt. Dieser Zustand tritt ein, wenn entweder eine der drei Blinklampen 12, 13 oder 14 defekt ist, oder aber wenn der Hänger nicht elektrisch angeschlossen ist.

Wenn der Blinktaktgeber 17 nur eine Blinklampe 12 oder 13 oder 14 treibt, so erkennt er dies als Fehler und schaltet auf eine höhere Blinkfrequenz um. Dies wird auch auf der Signallampe 23 angezeigt, so daß der Fahrzeugführer den Fehlerzustand erkennt. Bei der insoweit beschriebenen Schaltungsanordnung 10 ist es dem Fahrzeugführer jedoch nicht möglich, zwischen dem Zustand zu unterscheiden, in dem der Hänger nicht elektrisch angeschlossen ist und dem Zustand, in dem eine der drei Blinklampen 12, 13 oder 14 defekt ist.

Ferner weist der Blinktaktgeber 17 zwei Steuereingänge E1 und E2 auf, welche ebenfalls mit den Schaltmitteln 24 verbunden sind. Diese Steuereingänge sind üblicherweise fest mit einem Spannungsteiler verbunden, über den die Zahl der zu überwachenden Blinklampen des Zugfahrzeuges festgelegt wird. Auf diese Weise kann der bekannte Blinktaktgeber 17 in unterschiedlichen Zugfahrzeugen nachgerüstet werden, die wahlweise zwei oder mehr Blinklampen je Fahrtrichtung aufweisen. Bei der neuen Schaltungsanordnung aus Fig. 1 ist jedoch auf die feste Beschaltung verzichtet worden, um es in noch näher zu beschreibender Weise zu ermöglichen, daß sämtliche Betriebszustände der Blinklichtanlage 11 auf der Signallampe 23 angezeigt werden. Zu diesem Zweck ist der Blinktaktgeber 17 über Steuerleitungen 24, 25, 26 mit den Schaltmitteln 24 verbunden. Ferner ist eine Spannungsleitung 28 vorgesehen, welche die Schaltungsmittel 24 mit der Versorgungsspannung 19 über den zwischengeschalteten Zündschalter 18 verbindet. Ferner ist zu erkennen, daß die Schaltmittel 24 eine über eine Hängererkennungsleitung 29 verbundene Hängererkennungsschaltung 30 aufweisen, welche in Fig. 1 mit AE bezeichnet ist. Die Hängererkennungsschaltung 30 erkennt in noch näher zu beschreibender Weise, ob ein Hänger elektrisch an das Zugfahrzeug angeschaltet ist. In diesem Falle gibt er auf der Hängererkennungsleitung 29 ein entsprechendes Signal aus.

In Fig. 1 ist ferner eine mit 31 gekennzeichnete akustische Einrichtung zu erkennen, welche in dem gezeigten Beispiel ein Piezosummer 32 ist.

Weiterhin ist eine Meßleitung 33 vorgesehen, über die die Schaltmittel 24 mit dem Taktausgang 21 verbunden sind. Über die Spannungsleitung 28 und die Meßleitung 33 vermögen die Schaltmittel 24 den Spannungsabfall über einem bei 34 angedeuteten Shuntwiderstand zu messen, durch den der Betriebsstrom der Blinklampen 12, 13, 14 der Blinklichtanlage 11 fließt. Diese Messung dient in noch näher zu beschreibender Weise dazu, daß der Betrieb der Warnblinkanlage des Zugfahrzeuges nicht zu einer Fehlfunktion der Schaltungsanordnung 10 führt.

Nach dem Starten des Zugfahrzeuges beschalten die Schaltmittel 24 die Steuereingänge E1 und E2 zunächst so, daß der Blinktaktgeber 17 zwei Blinklampen 12, 13 je Fahrtrichtung ansteuert und überwacht. Wird jetzt ein Hänger elektrisch angeschaltet, so erkennt dies die Anhängererkennungsschaltung 30 und gibt ein entsprechendes Signal auf der Hängererkennungsleitung 29 aus. Dieses Signal veranlaßt die Schaltmittel 24 dazu, die Steuereingänge E1 und E2 so zu beschalten, daß die interne Schaltschwelle des Blinktaktgebers 17 so weit hochgesetzt wird, als ob das Zugfahrzeug selbst drei Blinklampen je Fahrtrichtung aufweisen würde. Fällt jetzt eine der beiden Blinklampen 12, 13 des Zugfahrzeuges oder die ebenfalls parallel geschaltete Blinklampe 14 des Hängers aus, so erkennt der Blinktaktgeber 17 dies an dem verglichen mit der Schaltschwelle zu geringen Stromfluß und schaltet auf die erhöhte Blinkfrequenz, so daß der Fahrzeugführer den Ausfall einer der drei Blinklampen 12, 13, 14 an dem Rhythmus des Blinkens der Signallampe 23 erkennen kann. Wird der Hänger elektrisch wieder abgeschaltet, geht das Signal auf der Hängererkennungsleitung 29 in den Anfangszustand zurück, so daß die Schaltmittel 24 die Steuereingänge E1 und E2 über die Steuerleitungen 26 und 27 wieder entsprechend für den Betrieb von zwei Blinklampen 12, 13 je Fahrtrichtung beschalten.

Obwohl also in dem durchgespielten Fall nur eine der drei angesteuerten Blinklampen 12, 13 oder 14 defekt ist, zeigt der Blinktaktgeber 17 dies auf die selbe Weise an, wie er bei Betrieb ohne Hänger den Ausfall einer der beiden Blinklampen 12 oder 13 des Zugfahrzeuges anzeigen würde. Bei dem Umrüsten eines konventionellen Zugfahrzeuges von einem für den Betrieb von zwei Blinklampen ausgelegten Blinktaktgeber auf den Blinktaktgeber 17 kann also auf das nachträgliche Einbauen einer Kontrollleuchte verzichtet werden, welche die auf den Kontrollausgang 25 anstehenden Signale anzeigt. Der Fahrzeugführer wird über die Signallampe 23, die sowieso im Armaturenbrett vorgesehen ist, vollständig über den Zustand seiner Blinklichtanlage informiert. Als zusätzliche Maßnahme ist der Piezosummer 32 vorgesehen, welcher von den Schaltmitteln 24 wahlweise so angesteuert wird, daß er entweder im Rhythmus der Signale des Kontrollausganges 25 ein akustisches Signal abgibt, oder dieses akustische Signal nur einmal zu Beginn des ersten Blinkvorganges je Fahrt ertönen läßt. Im letzteren Falle wird dem Fahrzeugführer durch das einmalige Signal angezeigt, daß der Hänger korrekt angeschaltet ist.

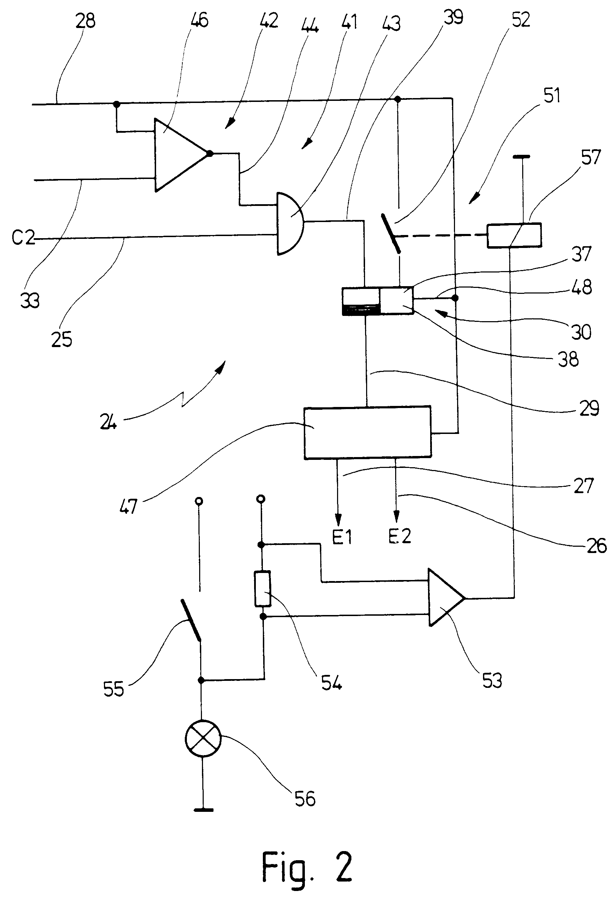

In Fig. 2 sind die Schaltmittel 24 genauer dargestellt.

Es ist zu erkennen, daß die Hängererkennungsschaltung 30 ein Speicherelement 37 in Form eines Flip-Flop 38 umfaßt, dessen Eingangsleitung 39 mit einer Logikschaltung 41 in Form einer Verriegelungsschaltung 42 verbunden ist. Die Verriegelungsschaltung 42 ihrerseits schleift den Kontrollausgang 25 auf den Eingang 39 des Flip-Flop 38 durch, welches das einmalige Anstehen eines Signales des Kontrollausganges C2 speichert. Es wurde bereits erklärt, daß der Blinktaktgeber 17 ein derartiges Signal nur dann ausgibt, wenn je Fahrtrichtung mehr Blinklampen betrieben werden, als über die Steuereingänge E1 und E2 ausgewählt wurden. Anders ausgedrückt bedeutet dies, daß bei einer üblichen Beschaltung der Steuereingänge E1 und E2 für zwei Blinklampen 12, 13 des Zugfahrzeuges eine parallel geschaltete dritte Blinklampe 14 des Hängers zur Ausgabe eines Signales am Kontrollausgang C2 führt. Dieses Signal wird in dem Flip-Flop 38 als Hängererkennung gespeichert.

In der Schaltung nach Fig. 2 ist weiter berücksichtigt, daß einige Blinktaktgeber 17 nicht zwischen dem Betrieb von drei Blinklampen je Fahrtrichtung und dem Betrieb von insgesamt vier Blinklampen bei eingeschalteter Warnblinkanlage unterscheiden können. Wenn die Warnblinkanlage eingeschaltet wird, so weisen derartige Blinktaktgeber ein Signal auf dem Kontrollausgang 25 auf, was wiederum dazu führt, daß die Hängererkennungsschaltung anspricht. Beim weiteren Betrieb kann es dann zu einer Falschmeldung kommen, wenn nämlich nach dem Abschalten der Warnblinkanlage wie bisher nur zwei Blinklampen je Fahrtrichtung betrieben werden, obwohl die Schaltmittel 24 die Steuereingänge E1 und E2 jetzt so beschalten, als würden drei Blinklampen je Fahrtrichtung betrieben werden. Obwohl also kein Hänger angeschaltet ist und obwohl weiter sämtliche Blinklampen je Fahrtrichtung betriebsbereit sind, schaltet der Blinktaktgeber 17 in einem solchen Falle auf die erhöhte Blinkfrequenz.

Um eine derartige Fehlfunktion zu verhindern, ist die Verriegelungsvorrichtung 42 vorgesehen, welche zu diesem Zweck eine Meßschaltung 46 umfaßt. Die Meßschaltung 46 ist mit der Spannungsleitung 28 und mit der Meßleitung 33 verbunden, so daß sie den Spannungsabfall über dem Shunt-Widerstand 34 mißt. Die Meßschaltung 46 ist jetzt so ausgelegt, daß sie an ihrem invertierenden Ausgang 44 nur solange ein H-Signal ausgibt, solange der Stromfluß durch den Shunt-Widerstand 34 einen bestimmten Wert nicht überschreitet. Dieser Wert entspricht dem gleichzeitigen Betrieb von vier Blinklampen durch den Blinktaktgeber 17.

Die Meßschaltung 46 ist mit ihrem Ausgang 44 zu einem UND-Gatter 43 geführt, auf dessen zweiten Eingang der Kontrollausgang 25 gelegt ist. Das UND-Gatter 43 führt mit seinem Ausgang 39 zu dem Flip-Flop 38. Solange der Strom durch den Shunt-Widerstand 34 den eingestellten Grenzwert nicht erreicht, ist der Ausgang der Meßschaltung 46 logisch H und der Kontrollausgang C2 wird durch das UND-Gatter 43 durchgeschleift und gelangt zu dem Flip-Flop 38.

Wenn jetzt die Warnblinkanlage eingeschaltet wird, fließt durch den Shunt-Widerstand 34 ein so hoher Strom, daß die Meßschaltung 46 an ihrem Ausgang 44 ein L-Signal ausgibt. Obwohl jetzt auf dem Kontrollausgang 25 ein H-Signal ansteht, kann dieses nicht durch das UND-Gatter 43 hindurch zu dem Flip-Flop 38 gelangen. Mit anderen Worten wird die Hängererkennungsschaltung 30 nicht geschaltet, obwohl das C2-Signal auf der Kontrolleitung 25 ansteht, dieses Signal wird vielmehr von der Hängererkennungsschaltung 30 abgekoppelt.

Der Ausgang des Flip-Flops 38 ist die Hängererkennungsleitung 29, die zu einer Spannungsteilerschaltung 47 führt, die noch näher beschrieben werden wird. Die beiden Ausgänge der Spannungsteilerschaltung 47 führen über die Steuerleitungen 26 und 27 zu den Steuereingängen E2 und E1 des Blinktaktgebers 17.

Ferner ist zu erkennen, daß das Flip-Flop 38 über seine Reset-Leitung 48 mit der Spannungsleitung 28 verbunden ist, so daß das Flip-Flop 38 jedesmal nach dem Ausschalten des Zündschalters 18 zurückgesetzt wird. Nach dem erneuten Starten des Zugfahrzeuges bleibt das Flip-Flop 38 zunächst in seinem Grundzustand, in dem es die Spannungsteilerschaltung 47 so ansteuert, daß die Steuereingänge E1 und E2 im Sinne von zwei zu überwachenden Blinklampen 12, 13 je Fahrtrichtung beschaltet werden. Ist jetzt ein Hänger elektrisch angeschlossen, so gibt der Kontrollausgang C2 beim ersten Betätigen des Fahrtrichtungsschalters 22 auf der Steuerleitung 25 ein Signal aus, das von dem Flip-Flop 38 gespeichert wird. Diese sogenannte Hängererkennung führt dann über die Hängererkennungsleitung 29 dazu, daß die Spannungsteilerschaltung 47 die Steuereingänge E1 und E2 nun im Sinne von drei zu überwachenden Blinklampen 12, 13, 14 beschaltet. Ist dies geschehen, gibt der Blinktaktgeber 17 kein C2-Signal mehr aus, da er wegen der hochgesetzten Schaltschwelle ja keinen Hänger mehr erkennt. Dies ist jedoch unschädlich, da die Hängererkennung gespeichert wurde. Es sei lediglich der Vollständigkeit halber erwähnt, daß der Wechsel von zwei auf drei überwachte Blinklampen lediglich beispielhaft ist. Es ist durchaus möglich, daß das Zugfahrzeug selbst bereits drei Blinklampen aufweist und/oder daß der Hänger je Fahrtrichtung selbst zwei Blinklampen hat.

Sobald also der Hänger erkannt wurde überwacht jetzt der Blinktaktgeber aufgrund der angehobenen inneren Schaltschwelle die Funktion aller drei Blinklampen 12, 13, 14. Fällt eine dieser Blinklampen 12, 13, 14 aus, so schaltet der Blinktaktgeber 17 auf die erhöhte Blinkfrequenz, was der Fahrzeugführer anhand der Signallampe 23 erkennt. Da er bereits vorher mittels des Piezosummers 32 über die korrekte Anschaltung des Hängers informiert wurde, weiß er, daß er sowohl die Blinklampen des Zugfahrzeuges als auch die des Hängers kontrollieren muß.

Wenn jetzt zwischendurch die Warnblinkanlage betätigt wird, so entkoppelt die Verriegelungsschaltung 42 zwar den Kontrollausgang C2 von dem Flip-Flop 38, nach dem Abschalten der Warnblinkanlage ist der Kontrollausgang C2 jedoch wieder zu dem Flip-Flop 38 durchgeschleift. Auf diese Weise wird verhindert, daß es zu der oben erwähnten Fehlfunktion kommt. Es ist jedoch möglich, daß beim Betätigen der Warnblinkanlage tatsächlich nur drei Blinklampen des Zugfahrzeuges funktionsfähig sind. Dies führt dann dazu, daß die Verriegelungsschaltung 42 nicht anspricht und das Flip-Flop 38 fälschlicherweise das Vorhandensein eines Hängers speichert. Der Blinktaktgeber wird damit in den Überwachungsmodus für drei Blinklampen je Fahrtrichtung geschaltet, obwohl in Wirklichkeit nur zwei Blinklampen je Fahrtrichtung vorhanden sind. Beim ersten Betätigen des Fahrtrichtungsschalters 22 führt dies dazu, daß der Blinktaktgeber das Fehlen zumindest einer Blinklampe erkennt und in den Fehlerzustand mit erhöhter Blinkfrequenz schaltet. Dies ist aber nicht nachteilig, sondern ganz im Gegenteil von Vorteil, weil nun nämlich bereits beim ersten Betätigen der Blinklichtanlage der Fahrzeugführer darüber informiert wird, daß eine der Blinklampen defekt ist.

Es wurde bereits erwähnt, daß jedesmal nach dem Abschalten des Zugfahrzeuges das Flip-Flop 38 in seinen Grundzustand zurückversetzt wird. Da in der Regel ein Fahrzeugführer das Zugfahrzeug abschaltet, bevor er den Hänger abkoppelt, ist auf diese Weise sichergestellt, daß nicht fälschlicherweise das Hängererkennungssignal in dem Flip-Flop 38 gespeichert bleibt. Als weitere optionale Maßnahme ist in Fig. 2 eine Reset-Vorrichtung 51 zu erkennen, welche mit dem Flip-Flop 38 verbunden ist. Wie sich aus dem folgenden ergibt, kann die Reset-Vorrichtung 51 die Verriegelungsschaltung 42 auch ganz ersetzen. Aufgabe dieser Reset-Vorrichtung 51 ist es, die Hängererkennungsleitung 29 in den Fällen zurückzunehmen, in denen der Fahrzeugführer einen Hänger abgekoppelt hat, ohne vorher oder zwischendurch das Zugfahrzeug auszuschalten. In einem solchen Falle würde nämlich das Flip-Flop 38 weiterhin auf der Hängererkennungsleitung 29 ein entsprechendes Signal ausgeben, was zu einem Fehlverhalten der Schaltungsanordnung 10 führen würde. Die Reset-Vorrichtung 51 schaltet aber auch ein durch die Warnblinkanlage fehlerhaft gesetztes Hängererkennungssignal zurück.

Die Reset-Vorrichtung 51 umfaßt einen Schließkontakt 52, welcher einen Reset-Eingang des Flip-Flops 38 mit der Versorgungsspannung 19 verbindet. Der Schließkontakt 52 kann entweder ein Türkontakt sein, so daß er beim Öffnen einer Türe des Zugfahrzeuges automatisch das Flip-Flop 38 zurücksetzt. Der Schließkontakt 52 kann aber auch gesondert im Fahrzeug vorgesehen sein, so daß der Fahrzeugführer nach dem Abkoppeln des Hängers durch einfachen Druck auf diesem Schalter die Hängererkennungsschaltung zurücksetzen kann.

In Fig. 2 ist jedoch gezeigt, daß der Schließkontakt 52 über eine Meßvorrichtung 53 geschaltet wird, welche den Stromfluß durch einen Meßwiderstand 54 mißt, der parallel zu einem Schalter 55 für eine Lampe 56 des Zugfahrzeuges geschaltet ist. Die Meßvorrichtung 53 schaltet ein Relais 57, zu dessen Kontakten auch der Schließkontakt 52 zählt.

Die Lampe 56 ist nur beispielhaft angegeben, sie kann z.B. das Hängerbremslicht oder das Hängerstandlicht sein. Die Meßvorrichtung 53 kann auf diese Weise entweder den normalen Bremsbetrieb des Hängers überwachen und somit bei dem ersten Bremsvorgang nach dem Abkoppeln des Hängers erkennen, daß der Hänger nicht mehr vorhanden ist. In Fig. 2 ist jedoch gezeigt, daß der Meßwiderstand 54 unmittelbar mit der Versorgungsspannung einerseits und mit der Lampe 56 andererseits verbunden ist. Der Wert des Meßwiderstandes 54 ist so groß, daß nur ein kleiner Strom in die Lampe 56 eingespeist wird, welcher sie noch nicht zum Glimmen bringt. Sobald jetzt die Lampe 56 entfernt wird, fällt keine oder wegen der Parallelschaltung der Lampen des Hängers zu den Lampen des Zugfahrzeuges eine geringere Spannung über dem Meßwiderstand 54 ab und die Meßvorrichtung 53 schließt den Schließkontakt 52, so daß das Signal auf der Hängererkennungsleitung 29 zurückgesetzt wird.

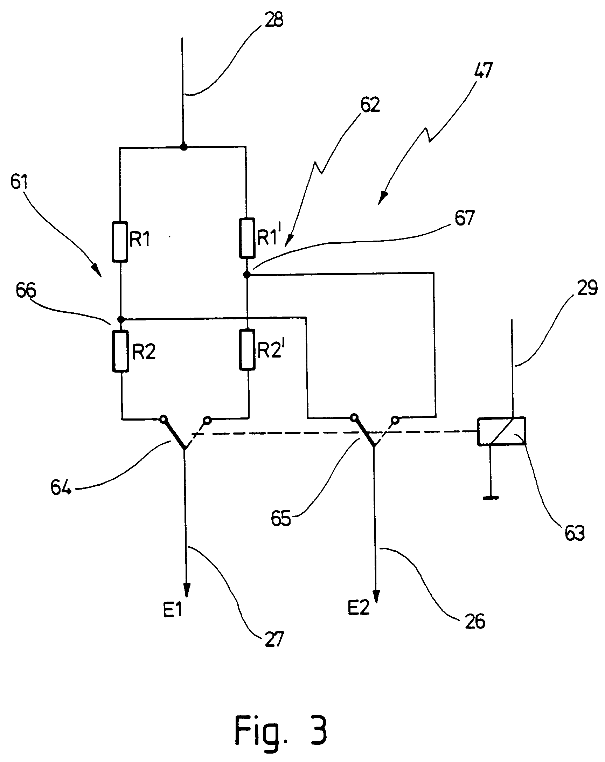

In Fig. 3 ist ein erstes Ausführungsbeispiel der Spannungsteilerschaltung 47 aus Fig. 2 dargestellt. Die Spannungsteilerschaltung 47 umfaßt zwei parallel geschaltete Spannungsteiler 61, 62, welche zwischen die Spannungsleitung 28 und die Steuerleitung 27 zu dem Steuereingang E1 geschaltet sind. Ferner ist ein Relais 63 vorgesehen, das zwei Umschaltkontakte 64, 65 aufweist. Der Umschaltkontakt 64 verbindet wahlweise den Spannungsteiler 61 oder den Spannungsteiler 62 mit der Steuerleitung 27. Der synchron mit dem Umschaltkontakt 64 betätigte Umschaltkontakt 65 verbindet dagegen wahlweise die Steuerleitung 26 mit Mittenabgriffen 66 bzw. 67 der Spannungsteiler 61 bzw. 62. Der Spannungsteiler 61 umfaßt zwei Widerstände R1, R2, durch deren Verhältnis zueinander die Steuereingänge E1 und E2 so beschaltet werden, daß der Blinktaktgeber 17 zwei Lampen je Fahrtrichtung erwartet und überwacht. Liegt jetzt auf der Hängererkennungsleitung 29 ein Signal an, so führt dies dazu, daß das Relais 63 die Umschaltkontakte 64, 65 umschaltet, so daß jetzt der Spannungsteiler 62 mit seinen Widerständen R1' und R2' die Steuereingänge E1 und E2 beschaltet. Diese Beschaltung kann beispielsweise so gewählt sein, daß der Blinktaktgeber 17 nunmehr drei Blinklampen je Fahrtrichtung erwartet und überwacht.

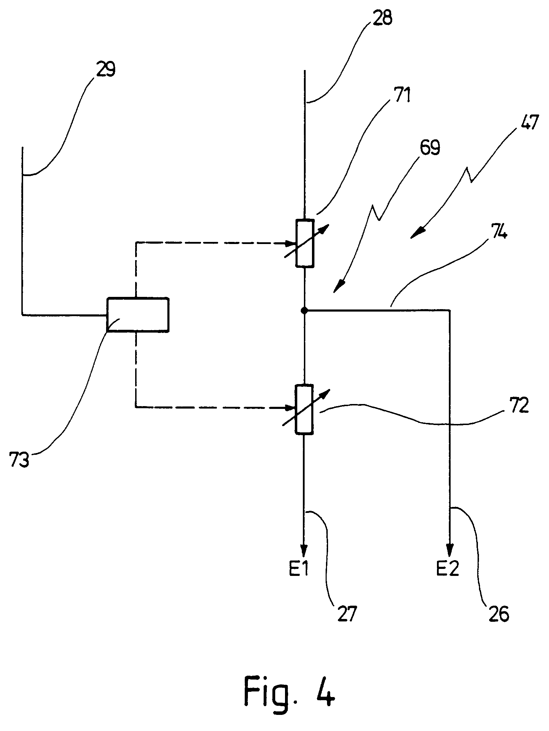

In Fig. 4 ist ein zweites Ausführungsbeispiel der Spannungsteilerschaltung 47 dargestellt, bei dem auf das Relais 63 verzichtet werden konnte. Diese Spannungsteilerschaltung 47 weist einen einzigen Spannungsteiler 69 auf, welcher eine Reihenschattung von elektrisch steuerbaren Widerständen 71, 72 umfaßt. Die Widerstände 71, 72 können z.B. FETs sein. Für die Ansteuerung der Widerstände 71, 72 ist eine schematisch angedeutete Steuerschaltung 73 vorgesehen, welche in Abhängigkeit von Signalen auf der Hängererkennungsleitung 29 die Widerstände 71, 72 so schaltet, daß sie entweder die Widerstandswerte R1 und R2 oder aber die Widerstandswerte R1' und R2' annehmen.

Auch dieser Spannungsteiler 69 ist zwischen die Spannungsleitung 28 und die Steuerleitung 27 zu dem Steuereingang E1 geschaltet. Der Mittenabgriff 74 ist wieder über die Steuerleitung 26 zu dem Steuereingang E2 geführt.

## Patentansprüche

1. Schaltungsanordnung für eine Blinklichtanlage (11) eines aus einem Zugfahrzeug und einem elektrisch an das Zugfahrzeug anschließbaren Hänger bestehenden Wagenzuges, mit einem Blinktaktgeber (17), der dazu ausgelegt ist, an seinem Taktausgang (21) sämtliche je Fahrtrichtung vorgesehenen Blinklampen (12, 13, 14) des Wagenzuges zu betreiben, der zumindest einen Steuereingang (E1, E2; 26, 27) aufweist, über den die Anzahl der je Fahrtrichtung vorgesehenen und überwachten Blinklampen (12, 13) des Zugfahrzeuges auswählbar ist, und der eine Signallampe (23) zur Anzeige des Blinktaktes treibt, wobei der Blinktaktgeber (17) bei nicht elektrisch angeschlossenem Hänger den Ausfall einer angesteuerten Blinklampe (12, 13) des Zugfahrzeuges über eine erhöhte Blinkfrequenz anzeigt, dadurch gekennzeichnet, daß der oder jeder Steuereingang (E1, E2; 27, 26) des Blinktaktgebers (17) mit Schaltmitteln (24) verbunden ist, die bei elektrisch angeschlossenem Hänger den oder jeden Steuereingang (E1, E2; 27, 26) derart beschalten, daß der Blinktaktgeber (17) bei Ausfall einer angesteuerten Blinklampe (12, 13, 14) des Wagenzuges auf die erhöhte Blinkfrequenz schaltet.

2. Schaltungsanordnung nach Anspruch 1, dadurch gekennzeichnet, daß die Schaltmittel (24) bei elektrisch angeschlossenem Hänger den oder jeden Steuereingang (E1, E2; 27, 26) derart beschalten, daß die Anzahl der überwachten Blinklampen (12, 13, 14) gleich der Anzahl der Blinklampen (12, 13, 14) je Fahrtrichtung ist.

3. Schaltungsanordnung nach Anspruch 1 oder 2, dadurch gekennzeichnet, daß eine Hängererkennungsschaltung (30) vorgesehen ist, die einen elektrisch an das Zugfahrzeug angeschlossenen Hänger auf einer Hängererkennungsleitung (29) meldet.

4. Schaltungsanordnung nach Anspruch 3, bei der der Blinktaktgeber (17) einen Kontrollausgang (25) aufweist, an dem der je Fahrtrichtung gleichzeitige Betrieb der entsprechenden Blinklampen (12, 13, 14) des Zugfahrzeuges und des Hängers angezeigt wird, dadurch gekennzeichnet, daß die Hängererkennungsschaltung (30) mit dem Kontrollausgang (25) des Blinktaktgebers (17) verbunden ist und aus den Signalen des Kontrollausganges (25) einen elektrisch angeschlossenen Hänger erkennt.

5. Schaltungsanordnung nach Anspruch 4, dadurch gekennzeichnet, daß die Hängererkennungsschaltung (30) ein Speicherelement (47) umfaßt, welches das erste Ansprechen des Kontrollausganges (25) speichert und permanent auf der Hängererkennungsleitung (29) meldet.

6. Schaltungsanordnung nach einem der Ansprüche 1 bis 5, dadurch gekennzeichnet, daß der Kontrollausgang (25) mit einer akustischen Einrichtung (31) verbunden ist.

7. Schaltungsanordnung nach einem der Ansprüche 3 bis 6, dadurch gekennzeichnet, daß die Hängererkennungsschaltung (30) mit einer Reset-Vorrichtung (51) verbunden ist, über welche die Hängererkennungsschaltung (30) zurückschaltbar ist.

8. Schaltungsanordnung nach Anspruch 7, dadurch gekennzeichnet, daß die Reset-Vorrichtung (51) einen Schließkontakt (52) umfaßt.

9. Schaltungsanordnung nach Anspruch 7 oder 8, dadurch gekennzeichnet, daß die Reset-Vorrichtung (51) eine Meßvorrichtung (53) für den Stromfluß durch ausgewählte Lampen (56) des Hängers umfaßt und in Abhängigkeit von dem Stromfluß die Hängererkennungsschaltung (30) zurückschaltet.

10. Schaltungsanordnung für ein Zugfahrzeug mit einer Warnblinkanlage nach einem der Ansprüche 4 bis 9, dadurch gekennzeichnet, daß der Kontrollausgang (25) mit einer Verriegelungsschaltung (42) verbunden ist, die in Abhängigkeit von dem Betrieb der Warnblinkanlage den Kontrollausgang (25) von der Hängererkennungsschaltung (30) abkoppelt.

11. Schaltungsanordnung nach Anspruch 10, dadurch gekennzeichnet, daß die Verriegelungsschaltung (42) eine Meßschaltung (46) für den von dem Blinktaktgeber (17) abgegebenen Lampenstrom aufweist.

12. Schaltungsanordnung nach einem der Ansprüche 3 bis 11, dadurch gekennzeichnet, daß die Schaltmittel (24) eine Spannungsteilerschaltung (47) umfassen, welche in Abhängigkeit von Signalen auf der Hängererkennungsleitung (29) verschiedene Spannungsteiler (61, 62; 69) mit den Steuereingängen (E1, E2; 27, 26) verbindet.

13. Schaltungsanordnung nach Anspruch 12, dadurch gekennzeichnet, daß nur ein Spannungsteiler (29) vorgesehen ist, der elektronisch steuerbare Widerstände (71, 72) umfaßt, wobei das Spannungsteilerverhältnis in Abhängigkeit von Signalen auf der Hängererkennungsleitung (29) veränderbar ist.
